(19) Europäisches Patentamt
European Patent Office
Office européen des brevets

(11) Publication number: **0 146 148**
**A1**

(12) # EUROPEAN PATENT APPLICATION

(21) Application number: 84116057.5

(22) Date of filing: 21.12.84

(51) Int. Cl.[4]: C 07 F 7/12, C 07 F 7/08

(30) Priority: 22.12.83 US 564377

(43) Date of publication of application: 26.06.85 Bulletin 85/26

(84) Designated Contracting States: AT BE CH DE FR GB IT LI LU NL SE

(71) Applicant: UNION CARBIDE CORPORATION, Old Ridgebury Road, Danbury Connecticut 06817 (US)

(72) Inventor: Lewis, Kenrick Martin, 98-40 57th Avenue Rego Park, New York New York 11368 (US)
Inventor: Chang, Ching-Feng, 13259 Compass Point Drive, Strongsville 44136 State of Ohio (US)

(74) Representative: Wuesthoff, Franz, Dr.-Ing. et al, Patentanwälte Wuesthoff -v. Pechmann-Behrens-Goetz Schweigerstrasse 2, D-8000 München 90 (DE)

(54) **Redistribution of organohalosilanes utilizing Lewis-acid activated zeolite catalysts.**

(57) A method of redistributing a mixture of organohalosilanes, particularly methylchlorosilanes by contacting said mixture with a Lewis acid activated zeolite catalyst.

EP 0 146 148 A1

# REDISTRIBUTION OF ORGANOHALOSILANES UTILIZING LEWIS-ACID ACTIVATED ZEOLITE CATALYSTS

## TECHNICAL FIELD

This invention relates to a method for the redistribution of organohalosilanes utilizing Lewis-acid activated zeolite catalysts. More particularly, this invention relates to the production of trimethylchlorosilane by the redistribution of mixtures of other methylchlorosilanes.

## BACKGROUND ART

The preparation of methylchlorosilanes by direct synthesis (Rochow Synthesis, See U.S. - A - 2,380,995), results in the unavoidable formation of a considerable proportion of low-boiling products with a boiling point of less than 40°C (760mmHg.). Said low-boiling products include for example, tetramethylsilane, dimethylchlorosilane, methyldichlorosilane, methylchlorosilane, trichlorosilane, methylchloride, hydrocarbons, etc. A method of converting the above-mentioned low-boiling product mixture into compounds (especially trimethylchlorosilane) more useful in silicones industry is needed.

Many redistribution and alkylation methods are known in the art for the preparation of organohalosilanes from other silanes utilizing aluminum catalysts and reactants, and other materials. Thus, the preparation of organohalosilanes from other silanes has been achieved using a wide variety of catalysts, co-catalysts and reactants such as silica alumina,

zeolites, methyl chloride, metallic aluminum, hydrogen chloride, aluminum trichloride, methylaluminum halides, etc. Generally, of the Lewis acid activated catalysts, aluminum trichloride was the most widely used for these types of reactions. The utilization of aluminum trichloride and organoaluminum compounds as reagents and/or catalysts in these processes, however, was fraught with numerous difficulties.

A redistribution reaction is a rearrangement of at least two different substituents which are attached to a silicon atom or atoms. Two or more silanes having differing numbers of substituents such as $CH_3$ or Cl, for example, redistribute when said substituents exchange silicon sites. The resulting product or products still have a total of four substituents or atoms attached to the silicon atom, but in ratios different from that of the starting compounds. A typical redistribution reaction can be illustrated by the following:

$$(CH_3)_4Si + (CH_3)_2SiCl_2 \rightleftarrows 2(CH_3)_3SiCl$$

A disproportionation reaction is a type of redistribution reaction that occurs when a single silicon compound yields two or more dissimilar silicon compounds having substituents (i.e. $CH_3$ and Cl) in differing proportions from that of the initial starting compound. A disproportionation reaction can be illustrated by the following:

$$2(CH_3)_2SiCl_2 \rightleftarrows CH_3SiCl_3 + (CH_3)_3SiCl$$

The use of organoaluminum compounds in general results in pyrophoric, potentially explosive, and readily hydrolyzable organoaluminum by-products which must be disposed of via

lixiviation with water or alkali. This can be extremely hazardous because of the attendant hydrolysis of methylchlorosilanes to yield hydrogen chloride. Aluminum trichloride has appreciable solubility in methylchlorosilane mixtures which can produce separation and purification problems. Plugging problems in transport lines and distillation columns are usually concomitant with its use. Additionally, the use of aluminum trichloride involves long contact times ranging anywhere from two to twenty-four hours.

U.S. - A - 2,647,136, U.S. - A - 2,786,861 and U.S. - A - 3,793,357 all employ the use of an aluminum trichloride catalyst in the preparation of an alkylhalosilane by redistribution. The latter two patents also employ the use of an ≡SiH compound as the promoter or co-catalyst thus permitting the use of lower reaction temperatures. All of these patents, however, disclose processes operated under autogenous pressure and at temperatures between 150°-400°C for periods of two to twenty-four hours. Other patents which utilize an aluminum trichloride catalyst with or without a co-catalyst include U.S. - A - 2,730,540, U.S. - A - 3,655,710 and U.S. - A - 3,980,686. It should be noted, however, that not all Lewis-acid catalysts such as "boron trichloride, zinc chloride, iron chloride, copper chloride, etc." exert a "perceptible effect" on the course of these reactions. (U.S. - A - 2,647,136, Column 3, Lines 69-75).

Japanese Patent 3026 (1964) discloses the preparation of phenylmethyldichlorosilane from

phenyltrichlorosilane and tetramethylsilane utilizing an activated alumina catalyst at 240°C for 10 hours in an autoclave. Japanese Patent 1822 (1957) discloses the preparation of methyltrichlorosilane from trimethylchlorosilane and silicon tetrachloride utilizing an activated alumina catalyst at 280°C for 4 hours. Contrastingly, Japanese Patent 23,172 (1961) shows that $CH_3SiHCl_2$ is obtained by heating $(CH_3)_3SiCl$ and $HSiCl_3$ in the presence of alumina at 200°-400°C under autogenous conditions for up to 10 hours. Though all these patents disclose the use of activated alumina catalysts, the reactions involved require significantly longer reaction times (contact time) typically, of four hours or longer.

The use of methylaluminum sesquichloride to methylate methyl-trichlorosilane is disclosed in U.S. - A - 3,065,253. Here SiH compounds, e.g. methyldichlorosilane, is advantageously used to shorten the reaction time from 20 hours to 2 hours.

U.S. - A - 4,155,927 discloses a process for preparing trimethylchlorosilane by reacting methyldichlorosilane with methyl chloride and metallic aluminum. Methylchloride reacts with aluminum to form methylaluminum sesquichloride. The organoaluminum compound methylaluminum sesquichloride is the methylating agent which reacts with methyldichlorosilane to form aluminum trichloride and trimethylchlorosilane. This reaction is a methylation reaction not a redistribution reaction. This process is not catalytic. Furthermore, the production of $AlCl_3$

results in hazardous waste disposal problems as previously mentioned.

U.S. - A - 4,297,500 discloses a process for synthesizing trimethylchlorosilane from the low-boiling (<40°C) fraction of the Rochow direct synthesis (U.S. - A - 2,380,995) by hydrochlorination of this fraction in the presence of catalytic amounts of $AlCl_3$. The amount of HCl employed must be at least equal to the molar amount of tetramethylsilane in the low-boiling fraction. $AlCl_3$ is disclosed in this patent as a catalyst for the hydrochlorination reaction rather than redistribution.

U.S. - A - 4,158,010 discloses an improved redistribution process for preparing organosilanes by reacting a mixture of alkylhalosilanes with silanes containing an Si-H bond in the presence of organoaluminum compounds and hydrogen halides. The various forms or organoaluminum compounds utilized include: ethylaluminum dichloride, trimethylaluminum, methylaluminum sesquichloride, etc. This patent teaches (see Example 4) the synthesis of trimethylchlorosilane from the low-boiling fraction of the Rochow direct synthesis and added methyltrichlorosilane by heating the reaction mixture at reflux for 6 hours in the presence of methylaluminum sequichloride and hydrogen chloride. In effect, this method combines hydrochlorination and methylation with redistribution at long contact times.

The process of U.S. - A - 3,065,253; 4,155,927; 4,297,500 and 4,158,010 are all hampered

by the hazardous handling and disposal problems associated with the use of $AlCl_3$, organoaluminum halides and gaseous HCl.

U.S. - A - 3,384,652 discloses a method for the production of chlorosilanes and organic substituted chlorosilanes by disproportionation and condensation reactions of mixtures of organochlorosilanes in the presence of crystalline aluminosilicate catalysts (zeolites). These "aluminosilicate materials may also be converted to the H or acid form in which hydrogen ions occupy the cation ion sites" (Column 4, Lines 41-43). In general, "the H form is more stable in materials having $SiO_2/Al_2O_3$ of 3.5 or higher" (Column 4, Lines 45-47). Thus method utilizes zeolites having Bronsted acid sites. Moreover, as in the case of previous processes, this reaction requires long contact times.

U. S. - A - 3,207,699 relates primarily to the preparation of catalysts by chemically attaching a restricted quantity of alkylsilyl groups to the internal surface of an acidic refactory oxide of one or more metals (e.g., silica-alumina) at an elevated temperature, cooling the treated acidic refractory oxide in an atmosphere containing no oxygen, whereby the catalytic properties of the acidic cracking catalyst are significantly modified without completely destroying the acidity of the catalyst. Prior to attaching the alkysilyl groups, the refractory oxide is dried at elevated temperatures in order to prevent the reaction of the silane with water because the latter reaction interferes with

the desired reaction of the silane with the refractory oxide. This patent discloses that the refractory oxide contains signficant cracking activity both before and after treatment with the silane. The treated catalysts so produced are disclosed as being useful as redistribution (specifically, disproportionation) catalysts for trimethylsilane. U.S. - A - 3,346,349 relates primarily to the use of treated aluminaceous catalysts, including those of U.S. - A - 3,207,699, as redistribution (specifically, disproportionation) catalysts for various silanes. In U.S. - A - 3,346,349 both the class of silanes that can be used to treat the catalysts and the class of silanes that can be redistributed by the treated catalysts are expanded beyond the disclosure of U.S. - A - 3,207,699. U.S. - A - 3,346,349 contains a disclosure similar to the disclosure of U.S. - A - 3,207,699 with respect to the drying of the untreated catalyst and to the method of treatment of the dried catalyst with the silane. U.S. - A - 3,346,349 makes no reference to the cracking activity either of the untreated catalyst or of the treated catalyst. However, in view of the similar treating conditions, it would appear that the treated catalysts of both patents should have similar properties. As is shown in K. Tanabe, Solid Acids and Bases, Academic Press, N.Y. 1970, pp. 123-133, cracking activity in silica-alumina catalysts is associated with the presence of Bronsted acid sites on the catalyst. Hence, accepting the teachings of U.S. - A -

3,207,699 and 3,346,349 at face value, it appears they relate to redistribution catalysts with Bronsted acid sites rather than Lewis acid sites. However, it is possible that the silanes reacted with all the Bronsted acid sites on the surface of the silica and alumina in the treatment process of these patents and so the "catalysts" actually become non-acidic during treatment. In view of the high redistribution temperatures actually used in the Examples (e.g., 510°C), the redistribution reactions reported in these patents may simply have been thermally-induced redistribution reactions as distinguished from catalytically induced redistribution reactions. The possible lack of catalytic activity of the treated oxides of these references (despite the disclosure in U.S. - A - 3,207,699 that the treated catalysts retain significant cracking activity) is also consistent with the fact that the Examples of the patents make no reference to any cracking reaction after the initial treatment with silane. Japanese Patent 23,172/1961, however, illustrates that methyldichlorosilane is obtained by heating trimethylchlorosilane and trichlorosilane in the presence of an alumina catalyst at 200-400°C and under autogenous conditions for up to 10 hours. Longer residence times and/or higher temperatures promote the formation of silane, a known pyrophoric compound.

It is an object of the present invention to provide a method for the redistribution and/or disproportionation of mixtures of organohalosilanes utilizing a Lewis-acid activated zeolite catalyst.

More specifically, it is an object of the present invention to prepare trimethylchlorosilanes from mixtures of other methylchlorosilanes, especially those derived from the lower-boiling fraction of the Rochow synthesis utilizing a Lewis-acid activated zeolite catalyst.

It is an object of the present invention to effect such redistribution and/or disproportionation reaction without the use of aluminum trichloride or other organoaluminum compounds.

It is an object of the present invention to effect such redistribution and/or disproportionation reaction utilizing short contact times.

It is a further objective of the present invention to effect regeneration and reuse of said Lewis-acid activated zeolite catalyst.

SUMMARY OF THE INVENTION

This and other objects of the invention which will be apparent to those skilled in the art are achieved by the present invention which relates to a method for redistributing the halogen atom of a halosilane and at least one member selected from the group consisting of the hydrocarbyl group of a hydrocarbylsilane and the hydrogen atom of a hydrosilane which method comprises contacting a mixture of the halosilane, hydrocarbylsilane and/or the hydrosilane, with a Lewis-acid activated zeolite catalyst said zeolite having an average pore size of greater than about 0.6 nm, a $SiO_2$ to $Al_2O_3$ ratio of less than 8, a pyridine infrared adsorption band at $1451 cm^{-1}$, and substantially no

infrared adsorption band at $1545cm^{-1}$ at a time and at a temperature sufficient to effect said redistribution.

In a preferred embodiment, this invention relates to a method of catalytically redistributing a mixture of compounds having the formulas:

$$R_nSiX_{4-n}, \text{ and } R_mSiHX_{3-m}$$

wherein R is an alkyl group having from 1 to 5 carbon atoms, or an phenyl group, X is a halogen, $n \leq 4$, and $m \leq 3$, which method comprises contacting the mixture of compounds with a Lewis acid-activated zeolite catalyst, said zeolite having an average pore size of greater than about 0.6 nm , a $SiO_2$ to $Al_2O_3$ ratio of less than 8, a pyridine infrared adsorption band of $1451cm^{-1}$, and with substantially no infrared adsorption band at $1545cm^{-1}$, at a time and at a temperature sufficient to effect said redistribution.

Another preferred embodiment of the present invention relates to a method of catalytically redistributing the halogen, the hydrogen, the alkyl groups and/or the aryl groups of a single silane represented by the formula:

$$R_nSiX_{4-n}$$

wherein R is hydrogen, an phenyl group, or an alkyl group containing from 1 to 5 carbon atoms, X is a halogen, and n has a value from 1 to 3, which method comprises contacting the silane in the presence of a Lewis acid-activated zeolite catalyst, said zeolite having an average pore size of greater than about 0.6 nm. a $SiO_2$ to $Al_2O_3$ ratio of less than 8, a pyridine infrared adsorption band at $1451cm^{-1}$, and with substantially no infrared

adsorption band at $1545cm^{-1}$, at a time and at a temperature sufficient to effect said redistribution.

BRIEF DESCRIPTION OF DRAWING

The sole figure is a schematic drawing depicting apparatus suitable for use in carrying out the redistribution reaction of the present invention.

DETAILED DESCRIPTION OF DRAWING

The embodiments of the present invention are best understood by referring to Figure 1. The silane reactants are stored in the vessel 1 and passed through the sintered stainless steel filter 2 to the calibrated pump 3. Liquid from the pump is flash evaporated at 300°C-400°C in the vaporizer 4. The inlet pressure is recorded by the pressure indicator 5. The vaporized reactants are admitted to the reactor 6 that is made from Hastelloy B pipe reactor or Black steel reactor which is equipped with reducing fittings for reactant introduction and product outlet and which contains a zeolite catalyst bed. Quartz wool is placed at both ends of the pipe to keep the zeolite catalyst bed in place in the heated zone. The reactor is heated in a tube furnace 7. At the reactor outlet the gaseous silane product mixture is led to a condenser 8 and cooled by a suitable refrigerant, i.e., dry ice - isopropanol. The liquid silane product collected in the receiver 9 is subsequently analyzed and distilled. The practice of this invention is not in any way limited to the apparatus depicted herein. The valves and other minor fittings which would be obvious to those skilled in the art have been omitted.

DETAILED DESCRIPTION OF THE INVENTION

The present invention is a method of redistributing halogen atom of a halosilane and at least one member selected from the group consisting of the hydrocarbyl group of a hydrocarbylsilane and the hydrogen atom of a hydrosilane which method comprises contacting a mixture of the halosilane, hydrocarbylsilane and/or the hydrosilane, with a Lewis-acid activated zeolite catalyst said zeolite having an average pore size of greater than about 6 Angstroms, a $SiO_2$ to $Al_2O_3$ ratio of less than 8, a pyridine infrared adsorption band at $1451cm^{-1}$, and with a substantially no infrared adsorption band at $1545cm^{-1}$, at a time and at a temperature sufficient to effect said redistribution.

A halosilane is defined as any silane containing a halogen atom directly bonded to the silicon atom. A hydrocarbylsilane is defined as any silane containing an alkyl group having from one to five carbon atoms or any phenyl group which is directly bonded to the silicon atom. A hydrosilane is defined as any silane contaning a hydrogen atom which is directly bonded to the silicon atom.

In a preferred embodiment, the present invention is a method of catalytically redistributing a mixture of compounds having the formulas:

$$R_nSiX_{4-n}, \text{ and } R_mSiHX_{3-m}$$

wherein R is an alkyl group having from 1 to 5 carbon atoms, or an phenyl group, X is a halogen, $n \leq 4$, and $m \leq 3$, which method comprises contacting the mixture of compounds in the presence of a Lewis acid-activated zeolite catalyst, said

zeolite having an average pore size of greater than about 0.6 nm, a $SiO_2$ to $Al_2O_3$ ratio of less than 8, a pyridine infrared adsorption band at $1451cm^{-1}$, and with substantially no infrared adsorption band at >$545cm^{-1}$, at a time and at a temperature sufficient to effect said redistribution.

Another preferred embodiment of the present invention is a method of catalytically redistributing the halogen, the hydrogen, the alkyl groups and/or the aryl groups of a single silane represented by the formula:

$$R_nSiX_{4-n}$$

wherein R is hydrogen, an phenyl group, or an alkyl group containing from 1 to 5 carbon atoms, X is a halogen, and n has a value from 1 to 3, which method comprises contacting the silane in the presence of a Lewis acid-activated zeolite catalyst, said zeolite having an average pore size of greater than about 0.6 nm, a $SiO_2$ to $Al_2O_3$ ratio of less than 8, a pyridine infrared adsorption band at $1451cm^{-1}$ and with substantially no infrared adsorption band at $1545cm^{-1}$, at a time and at a temperature sufficient to effect said redistribution.

Illustrative of the compounds represented by $R_nSiX_{4-n}$ are the following:

| | |
|---|---|
| $CH_3SiCl_3$ | $(C_3H_7)SiCl_3$ |
| $(CH_3)_2SiCl_2$ | $(C_4H_9)_2SiCl_2$ |
| $C_2H_5SiCl_3$ | $ArSiCl_3$ |
| $(C_2H_5)_2SiCl_2$ | $Ar_2SiBr_2$ |
| $(C_2H_5)_3$ | $Ar_3SiCl$ |
| $(CH_3)_4Si$ | $(C_6H_5)_4Si$ |
| $(C_2H_5)_4Si$ | $(C_3H_7)_4Si$ |

Illustrative of the compounds represented by $R_mSiHX_{3-m}$ are the following:

| | |
|---|---|
| $(CH_3)_3SiH$ | $(C_3H_7)_2SiHCl$ |
| $(CH_3)_2SiHBr$ | $ArSiHBr_2$ |
| $CH_3SiHCl_2$ | $Ar_2SiHB4$ |
| $(C_2H_5)_2SiCHl$ | |

The term "zeolitic Lewis acid catalyst(s)" is employed herein to denominate the zeolites generally employable herein for the redistribution of organohalosilanes. The zeolitic Lewis acid catalyst(s) employed in the instant invention is characterized as having an effective amount of Lewis acidity and low Bronsted acidity, i.e., a low proportion of hydroxyl sites. A Bronsted acid is a proton donor ($H^+$). A Lewis acid is an electron-pair acceptor (electron deficiency).

The Lewis acidity of small pore zeolites (average pore size less than about 6 Angstroms) and large pore zeolites (greater than about 6 Angstroms) can be characterized by reference to the dehydroxylation of such zeolites upon calcination. Such calcined zeolites will generally have a Lewis acidity substantially the same as zeolites capable of characterization with pyridine. The actual selection of the calcination temperature employed to form a zeolite with substantial Lewis acidity will be dependent upon the thermal stability of the particular zeolite. In general, zeolites of higher silica to alumina ($SiO_2/Al_2O_3$) ratios are more thermally stable. (See Breck, Zeolite Molecular Sieves, Ch. 6, John Wiley and Sons, N.Y. 1974; ACS Symposium Series, 171, pg. 286-291, 1976). However,

total Lewis acidity is increased at lower $SiO_2/Al_2O_3$ values. (Bulletin of the Chemical Society of Japan, Vol. 47, pg 801-805, 1974). Consequently, zeolites employable herein, will be calcined at temperatures and times chosen to preserve the characteristic crystalline structure of the zeolites. These temperatures and times are also correlated to provide an effective amount of Lewis acidity necessary to effect the silane redistribution. For the zeolites of this invention, calcination temperatures are from 400°C-800°C for an effective time of between 1 and 6 hours. The preferred temperature is 600°C-700°C for 5 hours. The Lewis-acid acidity of such zeolites may be related to cations associated with the zeolite such that zeolites which are in the hydrogen or ammonium form are more readily converted to zeolitic Lewis acid catalysts upon calcination.

The acidity of zeolitic Lewis acid catalyst (generally in the calcined form) having an average pore size greater than about 0.6 nm can be characterized by the infrared spectrum of adsorbed pyridine wherein such preferred zeolitic Lewis acid catalysts are characterized by an infrared band at about $1451cm^{-1}$ with substantially no infrared band at $1545cm^{-1}$. A procedure for measurement of the Lewis acidity of zeolites using the infrared pattern of pyridine is discussed in "The Nature of Active Sites on Zeolites X. The Acidity and Catalytic Activity of Zeolites" Journal of Catalysis, 14, 365-378 (1969). Zeolites having the required Lewis acid acidity in either their synthesized or in a modified, e.g., ion-exchanged

and/or calcined form, can include both natural and synthetic zeolites. Representative of zeolites employable herein which may have their Lewis acidity characterized by the infrared spectrum of adsorbed pyridine include: mordenite (sodium and hydrogen forms), offretite, omega, ferrierite, zeolite X, zeolite Y and zeolite L. Pyridine, however, is not an acceptable absorbate for "small pore" zeolites, i.e., having average pore sizes less than about 6Å. Therefore, such small pore zeolites can be characterized by reference to the dehydroxylation of such small pore zeolites as previously mentioned.

Zeolites which are generally employable in the instant process when characterized by the aforementioned Lewis acidity include: zeolite X, zeolite Y, zeolite A, zeolite B, zeolite E, zeolite F, zeolite G, zeolite H, zeolite J, zeolite K-G, zeolite L, zeolite P-L, zeolite M, zeolite KM, zeolite P, zeolite R, zeolite S. zeolite T, zeolite U, zeolite Z, ZK-4, ZK-5, ZSM-type zeolites, NU-type zeolites, FU-type zeolites, faujasite, analcite, paulingite, ptilolite, clinoptilolite, ferrierite, chabazite, gmelinite, levgnite, erionite, mordenite, offretite and omega, with the preferred zeolitic Lewis acid catalysts being selected from the group consisting of zeolite X, zeolite Y, zeolite L, mordenite, and mixtures thereof. The zeolites of the present invention are further characterized by a $SiO_2$ to $Al_2O_3$ ratio of less than 8 and more preferably less than 6.

The zeolite catalysts of the instant invention must be specifically activated to generate

Lewis acid sites. The activation and regeneration procedure of the instant invention differs significantly from that disclosed in U.S. - A - 3,346,349 and 3,207,699 previously discussed. The activation and regeneration procedures of these patents actually destroy the acidity of the silica alumina catalyst.

In order to generate Lewis acidity the zeolite catalysts to be used in the present invention are first calcined at temperatures of 400°C to 800°C for periods of 1-12 hrs. Activation of the zeolite can be performed in a separate reactor, such as a Hastelloy reactor (Fig. 1) or a steel reactor or in situ in the same reactor used for the redistribution reaction. The latter mode is preferred because any transfer of the activated catalyst carries the risk of surface re-hydration. The spent catalyst can also be regenerated in situ. During activation and regeneration a dry, inert gas such as air, nitrogen, argon or helium, flows through the catalyst bed as the temperature is raised to the desired setting. The flow is maintained once this temperature has been reached as well as during the cooling stage. Periods as short as 1 hour may be used for activation. The flow rate of the dry, inert gas can cover a broad range, i.e. 0.5-50 lit/minute. At the lower limit of this range, it is only necessary to allow the volatile materials released from the hydrated alumina to be swept away. At the upper limit of this range, the maximum gas flow keeps the catalyst contained in the reactor.

The activated zeolite catalyst may be used as a fine power, as granules or as pellets. The larger particle size facilitates the flow of gaseous reactants and products through the fixed catalyst bed. The extruded pellets may contain any of the common binders, e.g. clay, silica, alumina, etc.

Once the zeolitic Lewis acid catalyst(s) of the present invention is activated, the mixtures of organohalosilanes are passed through the catalyst bed at temperatures of 200°C-450°C, preferably 300°C-350°C for a maximum contact time (reaction time) of less than ten minutes, preferably less than two minutes, in order to achieve the same degree of redistribution or better than that achieved by the prior art.

## EXPERIMENTAL

| Abbreviation | Meaning |
|---|---|
| Ar | phenyl group |
| D | $(CH_3)_2SiCl_2$ |
| $D_3$ | $[(CH_3)_2SiO]_3$ |
| $D_4$ | $[(CH_3)_2SiO]_4$ |
| $D_5$ | $[(CH_3)_2SiO]_5$ |
| DM | $(CH_3)_2SiHCl$ |
| gc | gas chromatograph |
| Higher Boilers | higher boiling methylchlorosiloxanes, composed mainly of oligomeric or cyclic methylsiloxanes from Rochow synthesis, generally having boiling points of greater than 100°C. |
| Lights | primarily $CH_3Cl$, butane and pentane from Rochow Synthesis and generally having boiling points of less than 37°C. |
| M | $(CH_3)_3SiCl$ |
| MD | $CH_3SiHCl_2$ |
| Q | $(CH_3)_4Si$ |

| | |
|---|---|
| SCFH | l/h |
| T | $CH_3SiCl_3$ |
| TC | $HSiCl_3$ |
| Tet | $SiCl_4$ |
| Zeolite 1 | Type Y $H^+$-form ($SiO_2/Al_2O_3$ = 6.2) |
| Zeolite 2 | Type A, $Na^+$-form ($SiO_2/Al_2O_3$ = 2.5) |
| Zeolite 3 | Mordentite, $H^+$-form ($SiO_2/Al_2O_3$ = 12.1) |
| Zeolite 4 | Type E ($SiO_2/Al_2O_3$ = 6.0) |
| Zeolite 5 | High-Silica, $H^+$-form ($SiO_2/Al_2O_3$ = 36.2) |
| Zeolite 6 | Type L ($SiO_2/Al_2O_3$ = 5.6) |
| Zeolite 7 | Type omega ($SiO_2/Al_2O_3$ = 7.5) |
| Zeolite 8 | High Silica Zeolite 1/16 in. extrudate, ($SiO_2/Al_2O_3$ = 43.0) |

## EXAMPLES

All of the Examples utilized the apparatus outlined in Figure 1 except where indicated otherwise.

The "forecut" or "lower-boiling fraction" mentioned in the Examples, is that fraction of the product from the Rochow synthesis (see U.S. - A - 2,380,995) with a boiling point of less than 40°C. Its principal components and their concentration ranges are typically as follows:

| Compound | Boiling Pt.°C | Range, Wt % |
| --- | --- | --- |
| Tetramethylsilane | 26.5 | 40-75 |
| Dimethylchlorosilane | 36.0 | 3-25 |
| Methldichlorosilane | 40.7 | 2-9 |
| Methylchlorosilane | 8.7 | 1-5 |
| Trichlorosilane | 31.8 | 5-10 |
| Methyl Chloride | -24.0 | 5-10 |
| Hydrocarbons | 30.37 | 5-8 |

The hydrocarbons are mostly $C_4$ and $C_5$ paraffins and olefins. The forecut contains no dimethyldichlorosilane and the desired reaction is as follows:

$$(CH_3)_4\,Si + (CH_3)_2SiCl_2 \rightleftarrows 2(CH_3)_3SiCl$$

Dimethyldichlorosilane is added to said forecut in a molar amount, which is at least equal to the molar amount of tetramethylsilane. In practice, a slight excess (up to 10%) of dimethyldichlorosilane is used in order to force the equilibrium reaction in favor of $(CH_3)_3SiCl$.

The methyl lights stream, "Lights", shown in the examples, boils below 37°C. It is the product cut

between methylchloride and methyldichlorosilane, in the methyls crude stream. After separation, the stream contains the following components:

| | | BP (°C) |
|---|---|---|
| Tetramethylsilane | $Me_4Si$ | 26.5 |
| Dimethylchlorosilane | $Me_2SiHCl$ | 36.0 |
| Trichlorosilane | $HSiCl_3$ | 40.7 |
| Monomethylmonochlorosilane | $MeSiH_2Cl$ | 8.7 |
| Methyl Chloride | MeCl | -24.0 |
| Hydrocarbons: | | |
| Iso-butane | Iso-$C_4$ | -11.7 |
| Iso-pentane | Iso-$C_5$ | 28.0 |
| n-pentane | n-$C_5$ | 36.3 |
| Amylene, etc. | | 30-37 |

The stream contains hydrocarbons in addition to methylchlorosilane monomers and methylchloride. The hydrocarbons are the byproducts of methylchloride cracking in the methyl reactors used in the Rochow synthesis.

EXAMPLE 1

This example was performed to duplicate the procedure and process followed in Example 2 of U.S. - A - 3,384,642.

7 zeolites (Table 1) spanning a broad range of silica/alumina molar ratios and pore sizes were activated at 100°C in vacuo for 7 h and cooled in a desiccator containing Drierite prior to use. In this experiment 107 gm (about 100 ml) of dimethyldichlorosilane (D) and 20 gm zeolite were heated together in a 3-neck 250 ml round bottom flask at reflux (70°C) for 6 h . The flask was fitted with a reflux condenser, heating mantle, magnetic stirrer, thermometer and serum cap, through which a syringe was inserted to withdraw samples for analysis by gas chromatography. The outlet from the reflux condenser was connected to a nitrogen vent line via a drying tube packed with Drierite. At the end of the reaction time, the stirrer was turned off and a sample of the liquid was taken for gas chromatography analysis. The disproportionation products, trimethylchlorosilane (M) and methyltrichlorosilane (T), were not detected. Dimethyldichlorosilane (D) was the only methylchlorosilane detected. Small quantities of oligomeric dimethylsiloxanes and oligomeric methylchlorosiloxanes were also observed. They were formed by hydrolysis of the dimethyldichlorosilane (D). The results of these experiments showed that Example 2 of U.S. - A - 3,384,642 was not reproducible as described.

Table 1

Zeolites Samples Used to Evaluate the Process of U.S. 3,384,642

| Zeolite | $SiO_2/Al_2O_3$ |
|---|---|
| Zeolite 1 | 6.2 |
| Zeolite 2 | 2.5 |
| Zeolite 3 | 12.1 |
| Zeolite 4 | 6.0 |
| Zeolite 5 | 36.2 |
| Zeolite 6 | 5.6 |
| Zeolite 7 | 7.5 |

0146148

EXAMPLE 2

This example used zeolite 1, 3 and 5 from Example 1 and activated them for Lewis acidity. The same procedure as outlined in Example 2 of U.S. - A - 3,384,652 was then followed (see Example 1).

Zeolites of high and low silica/alumina molar ratios were activated for Lewis acid activity by calcination in dry air at 700°C for 6.5 hrs. They were then cooled overnight in a dessicator containing Drierite. Samples (4.0 g ) of these zeolites (see Table 2) were heated separately with 27 gm (about 25 ml) portions of dimethyldichlorosilane in the apparatus described in Example 1. The liquid was analyzed by gas chromatography after a reflux (70°C) time of 6 hrs. Even after Lewis acid activation, (which was not disclosed by U.S. - A - 3,384,652) the unreacted starting material was the only methylchlorosilane present.

Table 2

Zeolites Activated for Lewis Acidity

| Zeolite | $SiO_2/Al_2O_3$ |
|---|---|
| Zeolite 3 | 12.1 |
| Zeolite 1 | 6.2 |
| Zeolite 5 | 36.2 |

EXAMPLE 3

The promoting effect of Si-H compounds on the disproportionation of dimethyldichlorosilane is well-known in the prior art.

Therefore, in an effort to successfully carry out the experiment outlined in Example 2 of U.S. - A - 3,384,652, we added compounds containing Si-H bonds in order to determine if methyldichlorosilane (which contain Si-H bonds) would have an effect on the ability of Lewis acid activated aluminosilicates (zeolites) to disproportionate dimethyldichlorosilane. Samples of the zeolites (1, 3 and 5) described in Example 2 were used and the reactions were done in the apparatus previously described (Example 1).

In each of the three experiments utilizing zeolites 1, 3 and 5, respectively, 2.2 g (0.02 mole) $CH_3SiHCl_2$ (MD) was added to 26.7 g (0.21 mole) $(CH_3)_2SiCl_2$ (D) and heated under reflux (70°C) for 6 h . Gas chromatographic analysis showed only the starting materials. No other methylchlorosilanes were present.

EXAMPLE 4

This example was performed to determine if the reactions previously performed in Examples 1, 2 and 3 would proceed at approximately room temperature. The method followed was as illustrated in Example 1.

45.0 g of Zeolite 1 was activated for Lewis acidity at 700°C for 5 h and cooled in a dried air stream. This catalyst, in the form of 1.6 mm claybound extrudate, was placed in a 500 ml 4-neck round bottom flask fitted with a mechanical stirrer, reflux condenser and thermometer. The condenser was attached to a nitrogen vent via a drying tube packed with Drierite. The entire apparatus was dried and flushed with nitrogen before 100gm of a mixture of methylchlorosilanes was added. The mixture of methylchlorosilanes added had the composition shown in the first line of Table 3. On addition of the mixture of methylchlorosilanes, the temperature rose from 23°C to 50°C and a gas was evolved. Stirring was continued for 4 h at 30°-40°C (approximately room temperature) and samples were withdrawn periodically for gas chromatographic analysis. The temperature was maintained at room temperature to minimize loss of volatiles. It is clear from the data (Table 3) that the Lewis-acid activated zeolite caused the disproportionation of $(CH_3)_2SiHCl$ (DM) to $(CH_3)_3SiCl$ (M) and $(CH_3)_2SiCl_2$ (D). However, no disproportionation of $(CH_3)_2SiCl_2$ (D) occurred even in the presence of 3.4 wt % $HSiCl_3$ (TC) and 5.3 wt % $CH_3HSiCl_2$ (MD).

Table 3

Reaction of Methylchlorosilanes with Lewis Activated

Zeolite 1 at 30°-40°C in Stirred Reactor

| Total Reaction Time h | Temp °C | % M | % Q | % D | % DM | % MD | % TC | % Lights | % Higher Boilers |
|---|---|---|---|---|---|---|---|---|---|
| 0 | 23° | trace | 32.7 | 51.1 | 1.8 | 5.3 | 3.4 | 0.7 | 0.2 |
| 0.5 | 40 | 1.9 | 31.7 | 52.2 | 0.6 | 4.3 | 2.8 | 0.7 | 0.3 |
| 1.0 | 31 | 1.6 | 31.9 | 52.7 | 0.5 | 4.2 | 2.5 | 0.6 | 0.3 |
| 2.0 | 36 | 2.2 | 31.2 | 52.2 | 0.6 | 4.3 | 3.1 | 0.7 | 0.2 |
| 3.25 | 36 | 2.4 | 30.8 | 52.2 | 0.6 | 4.2 | 3.2 | 0.8 | 0.3 |
| 4.0 | 36 | 2.5 | 30.6 | 52.5 | 0.5 | 4.2 | 3.1 | 0.7 | 0.4 |

EXAMPLE 5

Zeolite samples of high and low silica/alumina ratios (as illustrated in Table 4) were activated for Lewis acid activity by calcination at 700°C for 6.5 h. followed by cooling in a dessicator containing Drierite. 3.0 - 6.0 g of each sample (utilizing zeolites 1, 3 and 5, respectively) was heated separately with 25-50 ml $(CH_3)_2SiCl_2$ (D) in a rocking autoclave for 6 h . The maximum temperatures attained are shown in Table 4. After cooling (approximately 12 h ) in the autoclave, the gas in the head-space was vented and the liquid products were retrieved for analysis. In each case, the liquid was clear and colorless, but the solids had changed from white to black. Gas chromatographic and mass spectrometric analyses showed that both $CH_3SiCl_3$ and $(CH_3)_3SiCl$ had been formed along with the cyclic dimethylsiloxanes, $D_3$, $D_4$, and $D_5$ and methylchlorosiloxanes. Also identified were butane, ethylmethyldichlorosilane and tetramethyldichlorodisilane. The latter products and the black color of the recovered zeolite are good evidence of $(CH_3)_2SiCl_2$ pyrolysis over the zeolites. The siloxanes were probably formed by hydrolysis during product transfer and sampling. The data of Examples 1 - 5 show that $(CH_3)_2SiCl_2$ (methyldichlorosilane) disproportionation occurred over Lewis acid activated zeolites only under autogenous pressure at approximately 290°C.

0146148

## EXAMPLE 6

57.0 g 1,6 mm alumina binded Zeolite 1 was activated by heating to 700°C for 5 h ., while maintaining a flow of dried air, 33 l. ./min, through the zeolite catalyst bed. The activation and reaction were performed in a reactor, 45.7 cm x 2.0 cm, made of black steel. A methylchlorosilane mixture having the composition shown in the first row of Table 5 was made by blending dimethyldichlorosilane with the forecut (lower boiling fraction) from the distillation of the crude product obtained from the Rochow Synthesis. The mixture was vaporized at 300°C and contacted with the Lewis acid activated zeolite at 300°C in the reactor system described in Figure 1. Pumping speed (liquid flow rate, ml/min) was varied to obtain a range of contact times. Product samples were taken for gas chromatographic analysis after the liquid feed flow had stabilized at the flowrates shown in the table. The gas flow rates shown are calculated from the composition of the feed assuming ideal gas behavior. A catalyst bed volume of 55.3 $cm^3$ was used to calculate the superficial contact times shown.

The data show that the product contained between 18-28% $(CH_3)_3SiCl$ (M) depending on the contact time. The catalyst performance was approximately constant for contact times in the range, 9-43 s.

## Table 4

**Reaction Conditions During Disproportionation of $Me_2SiCl_2$ Under Autogeneous Pressure over Lewis-Acid Zeolites**

| Zeolite | $SiO_2/Al_2O_3$ | Max. Temp. °C | Max. Press, bar | Time to Maxima (h .) | Total Reaction Time (h .) |
|---|---|---|---|---|---|
| Zeolite 1 | 6.2 | 290 | 27.6 | 5 | 6.0 |
| Zeolite 3 | 12.1 | 295 | 43.1 | 4 | 6.2 |
| Zeolite 5 | 36.2 | 292 | 41.4 | 3 | 6.0 |

## Table 5

**Redistribution of Methylchlorosilanes over Lewis Acid**

**Zeolite 1 at 300°C**

| Liquid Flow Rate, ml/min | Gas Flow Rate, ml/min | Contact Time, s | % M | % Q | % D | % DM | % TC | % T | MD | % Lights | % Higher Boilers |
|---|---|---|---|---|---|---|---|---|---|---|---|
| -- | -- | -- | -- | 26.1 | 51.3 | 9.0 | 5.6 | -- | 3.0 | 5.0 | -- |
| 2.3 | 936.9 | 3.54 | 20.5 | 20.5 | 41.5 | 6.1 | 3.4 | -- | 1.9 | 5.7 | 0.4 |
| 2.3 | 936.9 | 3.54 | 18.6 | 21.2 | 42.2 | 6.4 | 3.6 | -- | 1.9 | 5.8 | 0.2 |
| 0.89 | 362.5 | 9.16 | 27.1 | 16.0 | 42.6 | 5.8 | 1.3 | 0.2 | 1.1 | 4.9 | 1.0 |
| 0.95 | 387.0 | 8.58 | 26.2 | 16.3 | 42.7 | 5.9 | 2.0 | 0.1 | 1.4 | 4.8 | 0.6 |
| 0.19 | 77.4 | 42.9 | 26.7 | 16.5 | 41.4 | 5.3 | 1.9 | -- | 1.3 | 5.5 | 1.4 |
| 0.32 | 130.3 | 25.5 | 28.0 | 18.0 | 36.7 | 6.2 | 2.0 | -- | 1.3 | 6.5 | 1.3 |

## EXAMPLE 7

This Example was performed to determine if an increase in temperature would affect the redistribution reaction. The method of Example 6 was repeated with the same catalyst bed (Zeolite 1). The composition of the methylchlorosilane mixture is shown in the first row of Table 6. The temperature of the catalyst bed was changed to 420°C and the vaporizer for the liquid feed was held at 360°C-370°C. Table 6 shows that the $(CH_3)_3SiCl$ (M) content in the product was 42-43% for contact times of 14-17 s Thus, the redistribution reactions occurred more easily at 420°C than at 300°C.

## EXAMPLE 8

This Example was performed to determine what effect an increased flow rate would have on the redistribution reaction. The method of Example 6 was repeated with the same catalyst bed (Zeolite 1) but in this example the average liquid flow rate was increased to 154 ml/h (corresponding to a gas flow rate of about 1.2 l /min) so as to obtain a shorter was 2.8 s . (contact time = volume of catalyst/gas flowrate). The estimated contact time 2.8 second. Analysis of the product collected after 1 h showed 35% $(CH_3)_3SiCl$ (M) (see Table 7).

**Table 6**

**Redistribution of Methylchlorosilanes at 420°C over Lewis-Acid Zeolite 1**

| Liquid Flow Rate, ml/min | Gas Flow Rate, ml/min | Contact Time, s | % M | % Q | % D | % DM | % TC | % T | MD | % Lights | % Higher Boilers |
|---|---|---|---|---|---|---|---|---|---|---|---|
| -- | -- | -- | -- | 26.1 | 51.3 | 9.0 | 5.6 | -- | 3.0 | 5.0 | -- |
| 0.43 | 191.6 | 16.9 | 43.1 | 6.4 | 38.2 | 2.9 | -- | -- | -- | 4.1 | 5.1 |
| 0.51 | 229.5 | 14.5 | 42.4 | 6.9 | 38.3 | 2.6 | -- | -- | 0.1 | 4.3 | 5.1 |
| 0.65 | 292.5 | 11.4 | 37.6 | 8.4 | 40.8 | 5.1 | -- | 0.7 | 0.6 | 4.2 | 2.4 |
| 0.76 | 342.0 | 9.7 | 32.0 | 12.8 | 38.2 | 6.3 | 0.7 | 0.6 | 1.3 | 6.5 | 1.5 |
| 1.84 | 828.0 | 4.0 | 23.4 | 16.1 | 43.3 | 7.0 | -- | 0.6 | 1.8 | 5.3 | 1.0 |
| 1.84 | 828.0 | 4.0 | 22.5 | 16.4 | 43.9 | 6.8 | 1.3 | 0.6 | 1.9 | 4.8 | 1.1 |

**Table 7**

**Redistribution of Methylchlorosilanes over Lewis-Acid Zeolite 1 at 300°C (2.8 seconds contact time)**

| Total Reaction Time (hr) | % M | % Q | % D | % DM | % T | % MD | TC | % Lights | % Higher Boilers |
|---|---|---|---|---|---|---|---|---|---|
| 0 | trace | 27.3 | 44.5 | 8.40 | trace | 2.5 | 5.90 | 11.2 | trace |
| 1.0 | 35.1 | 11.7 | 35.7 | 4.5 | 0.1 | 1.4 | 3.3 | 5.8 | 2.3 |

EXAMPLE 9

The data shown in Table 8 was obtained with the same zeolite catalyst bed used in Examples 6-8 (Zeolite 1). The method utilized was as illustrated in Example 6. The methylchlorosilane mixture used had the composition shown in the first row of Table 8. The reactor temperature was at 220°C and the vaporizer at 210°C. Superficial contact times varied from 5-13 seconds, but there was little variation in $(CH_3)_3SiCl$ (M) content as noted previously for the test run at 420°C (Example 7). The temperature of the zeolite catalyst bed appears to be one of the major factors in determining the yield of $(CH_3)_3SiCl$ (M).

Table 8

Redistribution of Methylchlorosilanes over Lewis-Acid

Zeolite 1 at 220°C

| Liquid Rate ml/min | Gas Flow Rate, ml/min | Contact Time, s | % M | % Q | % D | % DM | % T | % MD | TC | % Lights | % Higher Boilers |
|---|---|---|---|---|---|---|---|---|---|---|---|
| -- | -- | -- | -- | 26.1 | 51.3 | 9.0 | 5.6 | -- | 3.0 | 5.0 | -- |
| 0.95 | 669.5 | 5.0 | 10.3 | 21.8 | 50.8 | 5.5 | 3.9 | -- | 2.1 | 5.3 | 0.3 |
| 0.95 | 669.5 | 5.0 | 7.7 | 25.4 | 46.9 | 6.8 | 4.8 | -- | 2.2 | 6.0 | 0.2 |
| 0.78 | 262.3 | 12.7 | 10.7 | 21.1 | 53.5 | 6.3 | -- | -- | 2.1 | 8.0 | 0.4 |
| 0.84 | 282.4 | 11.8 | 9.7 | 22.6 | 49.3 | 6.6 | 4.0 | -- | 2.0 | 5.5 | 0.4 |

EXAMPLE 10

In this example the black steel reactor was replaced by a Hastelloy B reactor, 38 cm x 2.2 cm . 53.3 g of Zeolite 1, taken from the same lot as that used in Examples 6 through 9, was activated in the same manner described in Example 6. The liquid methylchlorosilane mixture having the composition outlined in line 1 of Table 9, was fed to the reactor continuously for about 38 h Product samples were collected periodically for gas chromatographic analysis. The feed flow rate was maintained relatively constant for 2-6 h-periods and then changed (as illustrated in Table 9). The reactor temperature was maintained at 400°C and the vaporizer at 350°-360°C. At the end of the initial continuous run (approximately 38 h ), the catalyst was heated in a stream of dried air, about 4 l /min , at 700°C for 5 h . The reactivated catalyst was used four more hours for the redistribution of the methylchlorosilane mixture at 400°C.

Table 9 shows that $(CH_3)_3SiCl$ (M) content in the product remained at 40-45% for the first 20 hours of the experiment and declined in the ensuing 18 hours to approximately half its initial value. However, the deactivated catalyst was regenerable. After only 5 h heating at 1/8 the air flow used for initial activation, the catalyst was restored to its activity at the 22 h point of the continuous reaction. This example illustrates that significantly better results were

achieved utilizing the Hastelloy B reactor, as compared to the steel reactor (see Table 6 of Example 7).

**Table 9**

**Continuous Redistribution of Methylchlorosilanes over Lewis-Acid Zeolite 1 at 400°C**

| Reaction Period h | Liquid Flow Rate ml/hr | Gas Flow Rate ml/min | Contact Time. s | % M | % Q | % D | % DM | % TC | % T | MD | % Lights | % Higher Boilers |
|---|---|---|---|---|---|---|---|---|---|---|---|---|
| -- | -- | -- | -- | -- | 23.2 | 36.5 | 24.9 | 8.4 | -- | 1.1 | 5.9 | -- |
| 0-5.5 | 47.3 | 363.8 | 8.5 | 42.4 | 1.9 | 36.7 | 6.7 | -- | 2.5 | 0.6 | 2.7 | 6.6 |
| 5.5-10.5 | 25.2 | 197.3 | 15.7 | 45.0 | 1 0 | 31.8 | 6 2 | -- | 4.6 | 0.2 | 3.7 | 7.5 |
| 10.5-15.6 | 26.0 | 203.5 | 15.3 | 45.6 | 1.4 | 33.6 | 5.8 | -- | 3.6 | 0.3 | 3.8 | 5.9 |
| 15 6-20.6 | 29.6 | 228.3 | 13.6 | 40 2 | 4.0 | 38.1 | 6.6 | -- | 0.5 | 0.1 | 5.1 | 5.4 |
| 20.6-22.1 | 24.0 | 187.8 | 16.5 | 36.0 | 5.5 | 43.0 | 6.3 | -- | -- | 0.3 | 4.0 | 5.1 |
| 22.1-27.1 | 25.4 | 199.2 | 15.6 | 23.8 | 11.4 | 45.2 | 9.7 | -- | 0.7 | 0.6 | 5 0 | 3.7 |
| 27.1-32.8 | 21 7 | 170.5 | 18.2 | 23.1 | 12.8 | 40.8 | 13.7 | 2.0 | 0.9 | 1.2 | 5.2 | 0.4 |
| 32.8-37.8 | 15.2 | 118.7 | 26.2 | 22.7 | 12.7 | 43.4 | 12.2 | 3.1 | -- | 0.8 | 4.2 | 0.9 |
| --------- | (Reactivate Catalyst at 700°C/5h, with 4 l /min dried air) | | | | | | | | | | | |
| 37.8-41.8 | 13.3 | 102.2 | 30.4 | 34.0 | 7.4 | 37.6 | 10.3 | 1.8 | 1.1 | 0.8 | 4.4 | 2.8 |

EXAMPLE 11

It is well known that in the presence of a strong Lewis-Acid catalyst, e.g., $AlCl_3$, that the redistribution of tetramethylsilane (Tet) and dimethyldichlorosilane (D) yields trimethylchlorosilane (M). But the prior art does not teach the occurrence of the aforementioned reaction in the presence of weaker Lewis Acids, e.g., CuCl and $FeCl_3$ even at 350°-450°C. However, this example illustrates that Lewis acid activated Type Y Zeolites (Zeolite 1) are also redistribution catalysts for tetramethylsilane (Q) and dimethyldichlorosilane (D) mixtures.

62.7 g. of 1.6 mm alumina binded Zeolite 1 catalyst was calcined at 700°C for 5 h , as described in Example 6 in order to generate Lewis-acid sites. Activation and subsequent reaction were performed in the Hastelloy B reactor of Example 10. A liquid mixture containing 41.4 wt % $(CH_3)_4Si$ (Q) and 58.3 wt % $(CH_3)_2SiCl_2$ (D) was pumped at 1.04 ml/min into the vaporizer held at 350°C. The calculated volumetric flow rate was 417 ml/min and the contact time was 8.8 secs. Analyses of the product samples are shown in the accompanying table. It is evident that reaction occurred in accordance with the stoichiometry as follows:

$$(CH_3)_4Si + (CH_3)_2SiCl_2 \rightleftarrows 2(CH_3)_3SiCl$$

For every mole of $(CH_3)_3SiCl$ (M) formed, approximately twice the number of moles of $(CH_3)_2SiCl_2$ (D) is consumed. The results are illustrated in Table 10.

Table 10

Redistribution of Tetramethylsilane and Dimethyldichlorosilane

over Lewis-Acid Zeolite 1 at 400°C

| Total Reaction Time | Q Wt % | D Wt % | M Wt % | T Wt % | Higher Boilers Wt % | Lights Wt % | Q mole/100 g | D mole/100 g | M mole/100 g | mole M formed/D used |
|---|---|---|---|---|---|---|---|---|---|---|
| 0 | 41.4 | 58.3 | -- | -- | 0.2 | -- | 0.469 | 0.452 | 0 | 0 |
| 20 min | 12.8 | 17.0 | 69.3 | 0.1 | 0.7 | -- | 0.145 | 0.132 | 0.639 | 2.00 |
| 90 min | 11.2 | 16.1 | 71.8 | 0.1 | 0.7 | 0.1 | 0.127 | 0.125 | 0.661 | 2.02 |
| 120 min | 14.2 | 22.6 | 62.3 | 0.1 | 0.7 | 0.1 | 0.161 | 0.175 | 0.573 | 2.07 |

0146148

## EXAMPLE 12

In this example, the redistribution of tetramethylsilane (47.6 wt %) and methyltrichlorosilane (50.8 wt %) was studied in the unregenerated catalyst bed of Example 11. Reaction conditions were similar to that of Example 11, viz: catalyst bed at 400°C, vaporizer at 370°C, liquid flow rate 0.85 ml/min. The calculated gas volumetric flow rate and contact times were 346 ml/min and 10.6 seconds, respectively. Analysis of the reactor effluent by gas chromatography showed $(CH_3)_3SiCl$ (M) and $(CH_3)_2SiCl_2$ (D) in the products. From the data in Table 11, it is clear that the redistribution did not proceed exclusively by the reaction,

$$(CH_3)_4Si + CH_3SiCl_3 \rightleftharpoons (CH_3)_3SiCl + (CH_3)_2SiCl_2$$

Other reactions, e.g.,

$$(CH_3)_4Si + (CH_3)_2SiCl_2 \rightleftharpoons 2(CH_3)_3SiCl$$

probably contributed.

## EXAMPLE 13

The same catalyst bed used in Examples 11 and 12 was also used in this experiment The method utilized was as illustrated in Example 6. The methylchlorosilane composition used is shown in the first line of Table 12. The liquid feed was a blend of 73.6% $SiCl_4$ (Tet) and 24.2% $(CH_3)_4Si$ (Q), pumped at 0.65 ml/min. The analysis of the two samples collected showed the presence of 13% trimethylchlorosilane (M). The results are illustrated in Table 12.

Table 11

Redistribution of Tetramethylsilane and Methyltrichlorosilane

over Lewis-Acid Zeolite 1 at 400°C

| Total Reaction Time, (h ) | Q Wt % | T Wt % | M Wt % | D Wt % | Higher Boilers Wt % | Q mole/ 100 g | T mole/ 100 g | M mole/ 100 g | D mole/ 100 g | mole M/ mole Q | mole M/ mole T |
|---|---|---|---|---|---|---|---|---|---|---|---|
| 0 | 47.6 | 50.8 | -- | -- | 0.5 | 0.590 | 0.341 | 0 | 0 | 0 | 0 |
| 1 | 28.5 | 23.8 | 37.2 | 5.1 | 5.4 | 0.323 | 0.160 | 0.342 | 0.040 | 1.58 | 1.89 |
| 1.5 | 28.6 | 19.3 | 40.0 | 7.6 | 4.5 | 0.324 | 0.130 | 0.368 | 0.059 | 1.70 | 1.74 |
| 2.5 | 29.4 | 18.9 | 39.8 | 9.0 | 2.9 | 0.333 | 0.127 | 0.366 | 0.070 | 1.77 | 1.71 |

Table 12

Redistribution of $SiCl_4$ and $Me_4Si$ over

Lewis Acid Zeolite 1 at 400°C

| Total Reaction Time, (h ) | Q Wt % | Tet Wt % | D Wt % | T Wt % | Higher Boilers Wt % | M Wt % |
|---|---|---|---|---|---|---|
| 0 | 24.2 | 73.6 | 1.6 | -- | 0.6 | 0 |
| 0.5 | 23.0 | 60.0 | 2.2 | 0.7 | 1.5 | 12.6 |
| 1.0 | 22.4 | 58.4 | 3.1 | 1.3 | 1.5 | 13.3 |

## EXAMPLE 14

The disproportionation of $(CH_3)_2SiHCl$ (DM) was observed even at 30°-40°C over Lewis acid activated Zeolite 1 (see Example 4). In this Example, the reaction was done at 400°C on the same catalyst bed prepared for Example 11 and used for Examples 11 through 13.

The average liquid flow rate was 35.3 ml/min. Analysis of the product samples showed that $(CH_3)_2SiHCl$ (DM) had been converted principally to $(CH_3)_2SiCl_2$ (D). The results are illustrated in Table 13.

## EXAMPLE 15

The disproportionation of $CH_3SiHCl_2$ (MD) over the catalyst bed of Example 14 yielded $CH_3SiCl_3$ (T) as the principal product. The results obtained are illustrated in Table 14.

Table 13

Disproportionation of $(CH_3)_2SiHCl$ over Lewis Acid Zeolite 1 at 400°C

| Total Reaction Time, h. | M Wt % | D Wt % | DM Wt % | Q Wt % | MD Wt % | T Wt % | Lights | Higher Boilers |
|---|---|---|---|---|---|---|---|---|
| 0 | 1.4 | 0.6 | 96.7 | -- | 0.3 | 0.2 | 0.2 | 0.6 |
| 0.75 | 3.3 | 22.4 | 64.1 | 0.6 | 2.1 | 0.4 | 3.0 | 4.1 |
| 1.00 | 3.0 | 17.2 | 69.4 | 1.0 | 1.9 | 0.2 | 4.1 | 3.2 |
| 1.42 | 2.5 | 14.4 | 73.3 | 0.8 | 1.5 | 0.2 | 4.5 | 2.8 |

Table 14

Disproportionation of $(CH_3)SiHCl_2$ over Lewis Acid Zeolite 1 at 400°C

| Total Reaction Time, h | M Wt % | D Wt % | MD Wt % | T Wt % | Q Wt % | DM Wt % | TC Wt % | Higher Boilers |
|---|---|---|---|---|---|---|---|---|
| 0 | -- | -- | 99.9 | -- | -- | 0.1 | -- | -- |
| 1.00 | 0.1 | 2.6 | 77.0 | 11.8 | 1.9 | 0.7 | 0.4 | 5.5 |
| 1.58 | trace | 2.5 | 72.4 | 14.8 | 5.5 | 1.0 | 0.8 | 3.0 |
| 1.83 | 0.1 | 1.1 | 78.8 | 10.2 | 4.2 | 0.5 | 0.7 | 4.3 |

EXAMPLE 16

This example illustrates that the nature of the binder used to make the zeolite catalyst extrudate does not materially affect the success of the redistribution reaction. Since previously in the other examples, an alumina binder was utilized, this Example was performed to verify that the results achieved were due to the zeolite and not the alumina binder.

28 g of 3.2 mm silica-bonded Zeolite 1 was heated in the Hastelloy reactor of Example 10 to 700°C in a stream of dried nitrogen and maintained at that temperature for 17 hours. The bed was then cooled to 400°C and a mixture of methylchlorosilanes, having the composition illustrated in the first line of Table 15, was introduced through the vaporizer (400°C) at the liquid flow rate of 11.4 ml/h. Analyses of the samples taken at 2 h and 3 h are shown in Table 15.

EXAMPLE 17

68.1 gm of Zeolite 8, a high silica zeolite, was activated at 700°C for 5 h in a Hastelloy B reactor (18 cm •2.2 cm i.d.) in a 7.0 SCFH flow of dried air. The bed was cooled to 300°C for reaction with a mixture of methylchlorosilanes having the composition shown in the first line of Table 16. The liquid flow rate was 69 ml/h. Samples of the product taken at 20 min and 40 min. The results are illustrated in Table 16. The performance was inferior to that of the Zeolite 1 at 220°C. It is thought that the fall-off in activity

is due to the decreased amount of Lewis acid sites in high silica zeolites. Nonetheless, the experiment showed that redistribution of methylchlorosilanes is possible over zeolites covering a broad range of $SiO_2/Al_2O_3$ molar ratios, provided they have been activated for Lewis acid activity.

0146148

Table 15

Disproportionation of Methylchlorosilanes over Lewis Acid Zeolite 1 at 400°C

| Total Reaction Time, h | % M | % Q | % D | % DM | TC | T | MD | % Lights | Higher Boilers |
|---|---|---|---|---|---|---|---|---|---|
| 0 | -- | 38.7 | 50.0 | 5.2 | 2.2 | -- | 1.2 | 2.5 | 0.2 |
| 2 | 65.6 | 6.8 | 19.7 | 2.9 | trace | 0.3 | 0.1 | 2.6 | 2.0 |
| 3 | 41.7 | 15.6 | 33.5 | 4.0 | trace | 0.5 | 0.5 | 2.4 | 1.6 |

Table 16

Redistribution of Methylchlorosilanes over Lewis Acid High Silica Zeolite at 300°C

| Total Reaction Time | % M | % Q | % D | % DM | MD | TC | Lights | % Higher Boilers |
|---|---|---|---|---|---|---|---|---|
| 0 min | -- | 14.4 | 39.4 | 30.2 | 0.8 | 1.7 | 12.4 | 1.0 |
| 20 min | 5.0 | 10.7 | 33.6 | 34.0 | 0.1 | 2.9 | 10.7 | 2.9 |
| 40 min | 9.4 | 8.8 | 31.9 | 35.0 | 0.2 | 2.1 | 9.2 | 3.3 |

## CLAIMS

1. A method for catalytically redistributing the halogen atom of a halosilane and at least one member selected from the hydrocarbyl group of a hydrocarbylsilane and the hydrogen atom of a hydrosilane which method comprises contacting a mixture of the halosilane, hydrocarbylsilane and/or the hydrosilane, with a Lewis-acid activated zeolite catalyst, said zeolite having an average pore size of greater than about 0.6 nm, a $SiO_2$ to $Al_2O_3$ ratio of less than 8, a pyridine infrared adsorption band at $1451cm^{-1}$, and with substantially no infrared adsorption band at $1545cm^{-1}$ for a time and at a temperature sufficient to effect said redistribution.

2. The method of claim 1 for redistributing a mixture of compounds having the formulas:

$$R_nSiX_{4-n}, \text{ and } R_mSiHX_{3-m}$$

wherein R is an alkyl group having from 1 to 5 carbon atoms, or an phenyl group, X is a halogen, $n \leq 4$, and $m \leq 3$, or a single silane represented by the

$$R'_nSiX_{4-n}$$

wherein R' is hydrogen, an phenyl group, or an alkyl group containing from 1 to 5 carbon atoms, X is a halogen, and n has a value from 1 to 3.

3. The method of claim 1 or 2 wherein the single silane or the mixture of the halosilane, hydrocarbylsilane, and/or the hydrosilane is passed through a Lewis-acid activated alumina catalyst bed at a temperature range of 200°C-450°C and at a maximum contact time ten minutes.

4. The method of claim 3 wherein the single silane or the mixture of the halosilane hydrocarbylsilane, and/or the hydrosilane is passed through a Lewis-acid activated zeolite catalyst bed at a preferred temperature range of 350°C-400°C and a contact time of less than five minutes.

5. The method of claims 1 to 4 wherein the Lewis acid activated zeolite catalyst is zeolite X, zeolite Y or zeolite L or mordenite.

6. The method of claim 2 wherein the mixture of compounds are $(CH_3)_4Si$ and $(CH_3)_2SiCl_2$ or $(CH_3)_4Si$ and $SiCl_4$ or $(CH_3)_4Si$ and $CH_3SiCl_3$ or $(CH_3)_4Si$; $(CH_3)_2SiCl_2$; $(CH_3)_2SiHCl$; $HSiCl_3$ and $CH_3SiHCl_2$.

7. The method of claim 2 wherein the silane is $CH_3SiHCl_2$ or $(CH_3)_2SiHCl$.

EP-58 950
Union Carbide Corp

0146148

1/1

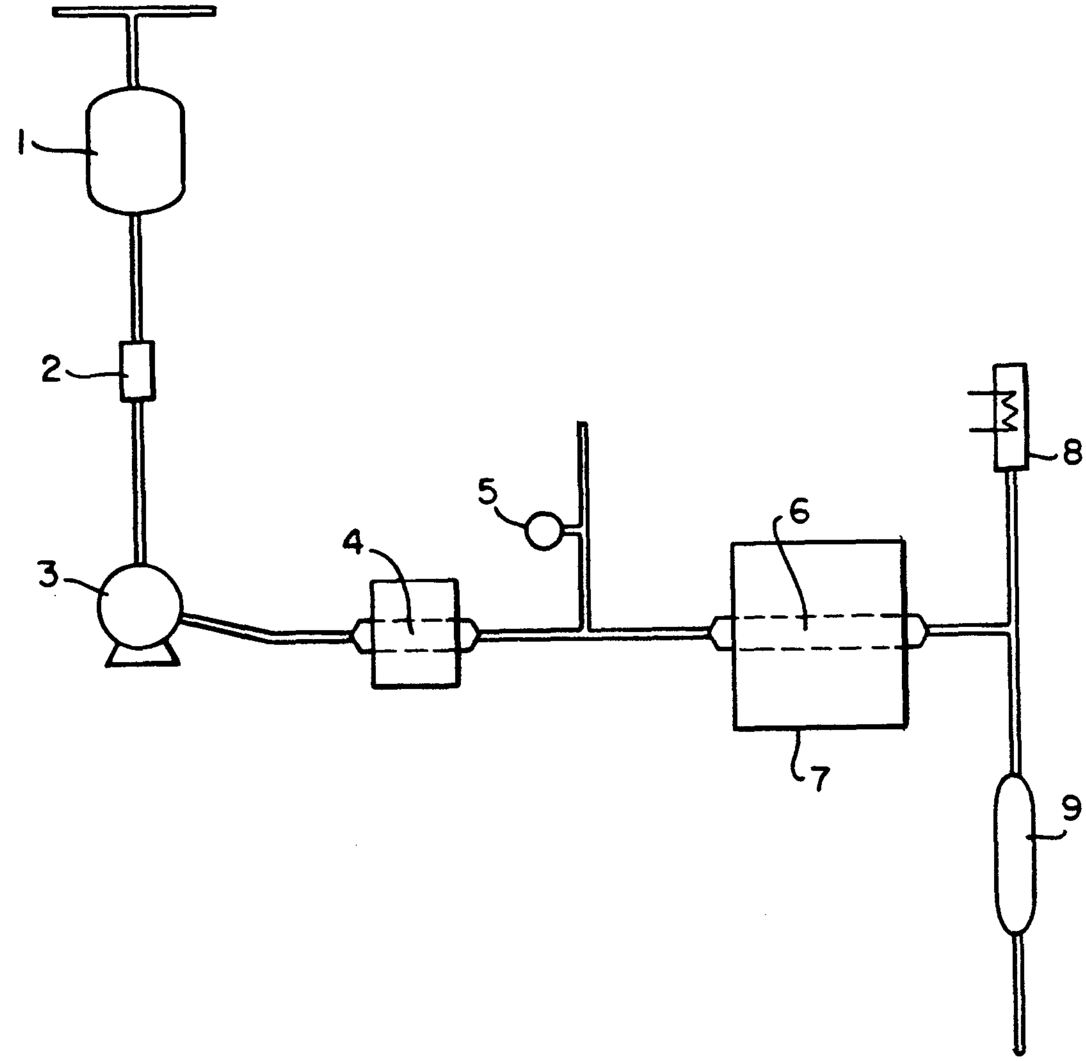

0146148

European Patent Office

# EUROPEAN SEARCH REPORT

Application number
EP 84 11 6057

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | FR-A-1 334 859 (HOUDRY) * Page 1 * --- | 1-7 | C 07 F 7/12<br>C 07 F 7/08 |
| D,Y | US-A-3 384 652 (L.A. HAMILTON) * Column 1, line 56 - column 2, line 20; column 3, line 49 - column 5, line 68 * --- | 1-7 | |
| D,Y | R.J.H. VOORHOEVE: "Organohalosilanes - Precursors to silicones", 1967, pages 48-55, Elsevier Publishing Company, New York, US; * Pages 50,51 * ----- | 1-7 | |
| | | | TECHNICAL FIELDS SEARCHED (Int. Cl.4) |
| | | | C 07 F 7/00 |

The present search report has been drawn up for all claims

| Place of search | Date of completion of the search | Examiner |
|---|---|---|
| THE HAGUE | 18-03-1985 | PAUWELS G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82